# EUROPÄISCHE PATENTSCHRIFT

(11) **EP 4 265 381 B1**
(45) Veröffentlichungstag und Bekanntmachung des Hinweises auf die Patenterteilung: **29.10.2025**
(21) Anmeldenummer: 23165015.1
(22) Anmeldetag: 29.03.2023
(51) Int. Cl.: B25J 21/02

(54) **ISOLATORSYSTEM**
ISOLATOR SYSTEM
SYSTÈME D'ISOLATEUR

(30) Priorität: 14.04.2022 DE 102022109269
(43) Veröffentlichungstag der Anmeldung: 25.10.2023
(73) Patentinhaber: Syntegon Technology GmbH, 70372 Stuttgart (DE)
(72) Erfinder: Vogt, Martin, 70327 Stuttgart (DE); Runft, Werner, 71364 Winnenden (DE); Franck, Thomas, 73547 Lorch (DE); Böhringer, Walter, 73630 Remshalden (DE)
(74) Vertreter: Novagraaf Group

(56) Entgegenhaltungen:
- WO-A1-2013/012367
- GB-A- 2 215 347

## Beschreibung

Die Erfindung betrifft ein Isolatorsystem, mit einem Isolator, der einen Innenraum zur Verarbeitung eines Stoffs aufweist, wobei der Innenraum begrenzt ist durch eine bodenseitige Aufstellfläche zur Anordnung einer Stoffverarbeitungseinheit und durch eine Isolatorkabine mit mindestens einer Zugriffsöffnung, wobei der Zugriffsöffnung mindestens eine Verschlussvorrichtung zur wahlweisen Freigabe oder Blockierung der Zugriffsöffnung zugeordnet ist.

Isolatorsysteme der vorstehend genannten Art sind beispielsweise aus der DE 10 2007 030 789 A1 bekannt und werden insbesondere in der Pharma- und Lebensmittelindustrie für Zwecke der Produktion, Verarbeitung und/oder Verpackung eines Stoffs verwendet.

In der Pharma- und Lebensmittelindustrie werden üblicherweise sehr viele Stoffe mit einer Vielzahl unterschiedlicher Stoffverarbeitungseinheiten verarbeitet, die sich hinsichtlich ihrer Eigenschaften, bspw. hinsichtlich ihrer Toxizität, voneinander stark unterscheiden. Auch die Empfindlichkeit, mit welcher die Stoffe durch Kontamination von außen verunreinigt werden können, variiert. Entsprechendes gilt für eine zu vermeidende Kreuzkontamination zwischen unterschiedlichen Stoffen.

Prinzipiell wäre es denkbar, für eine bestimmte Stoffverarbeitungseinheit und für einen bestimmten Stoff einen eigenen Isolator bereitzustellen. Allerdings beansprucht ein Isolator bei seiner Aufstellung nicht nur eine bestimmte Stellfläche ("Footprint"), sondern benötigt auch in seiner unmittelbaren Umgebung Platz zur Anordnung von Peripheriegeräten, für eine Zuführung von Ausgangsstoffen und eine Abführung von Produkten und für einen Zugang zum Isolator und dessen Innenraum durch Bedien- und Wartungspersonal.

Auch infolge der vorstehend beschriebenen Bedingungen ist es in der Praxis üblich, einen Isolator für unterschiedliche Stoffe zu verwenden und die Stoffverarbeitungseinheit zumindest bei Umstellung auf einen anderen Stoff gründlich zu reinigen. In dieser Zeit steht der Isolator für Produktions- und Verarbeitungs- oder Verpackungszwecke nicht zur Verfügung.

Aus der GB 2 215 347 A ist ein Isolatorsystem mit den Merkmalen des Oberbegriffs des Patentanspruchs 1 bekannt.

Hiervon ausgehend liegt der vorliegenden Erfindung die Aufgabe zugrunde, ein Isolatorsystem bereitzustellen, das eine verbesserte Auslastung ermöglicht.

Diese Aufgabe wird durch ein Isolatorsystem mit den Merkmalen des Patentanspruchs 1 gelöst.

Das erfindungsgemäße Isolatorsystem ermöglicht es, durch Austausch einer Isolatorkabine gegen eine Zusatzkabine eine Schutzstufe des Isolatorsystems ändern zu können. Eine solche Schutzstufe korrespondiert mit Klassifizierungen eines Isolatorsystems, welche in Stufen von 1 (niedrige Schutzwirkung) bis 6 (hohe Schutzwirkung) angegeben werden, und zwar als OEB-Wert ("Occupational Exposure Band") oder als OEL-Wert ("Occupational Exposure Limit"). Dabei benennt der OEB-Wert die Toxikologie des mittels der Stoffverarbeitungseinheit zu verarbeitenden reinen Stoffs und der OEL-Wert die durchschnittliche Konzentrationsbelastung des Personals während einer 8-h-Schicht. Sofern also für die Verarbeitung eines bestimmten Stoffs ein bestimmter OEB-Wert und ein bestimmter OEL-Wert vorgegeben sind, muss das Isolatorsystem eine Schutzstufe aufweisen, welche mindestens so hoch ist.

Zur Änderung der Schutzstufe ist vorgesehen, die gesamte Isolatorkabine gegen eine Zusatzkabine mit einer anderen Schutzstufe auszutauschen. Die bodenseitige Aufstellfläche verbleibt als stationärer Bestandteil des Isolatorsystems, wobei es möglich ist, eine an der Aufstellfläche angeordnete Stoffverarbeitungseinheit beizubehalten oder gegen eine gleichartige oder andersartige Stoffverarbeitungseinheit auszutauschen. Es ist möglich, dass die Isolatorkabine eine höhere Schutzstufe aufweist als die Zusatzkabine.

Der Erfindung liegt die Idee zugrunde, dass ein Isolator üblicherweise für eine ganz bestimmte und unveränderbare Schutzstufe konstruiert und ausgelegt ist. Die Isolatoren höherer Schutzstufen (beispielsweise der Schutzstufe 5) weisen aber Verschlussvorrichtungen auf, welche einen Zugriff in den Innenraum der Isolatorkabine mühsamer gestaltet, als dies bei Isolatorkabinen niedrigerer Schutzstufen (beispielsweise der Schutzstufe 3 oder 4) der Fall ist.

Zur Änderung der Schutzstufe ist es möglich, eine Verschlussvorrichtung gegen eine Zusatzverschlussvorrichtung auszutauschen. Auf diese Weise kann - für den Fall einer Umrüstung auf eine niedrigere Schutzstufe - ein Zugang zu dem Innenraum der Isolatorkabine dadurch vereinfacht werden, dass eine einer höheren Schutzstufe zugeordnete Verschlussvorrichtung gegen eine Zusatzverschlussvorrichtung ausgetauscht wird, welche einer niedrigeren Schutzstufe zugeordnet ist. Umgekehrt ist auch eine Umrüstung von einer niedrigeren Schutzstufe auf eine höhere Schutzstufe möglich.

Für die Isolatorkabine ist es bevorzugt, dass diese Isolatorkabine in einem Ausgangszustand Peripherie und Zubehör einer höheren Schutzstufe, beispielsweise der Schutzstufe 5, umfasst, beispielsweise eine Einrichtung zur Erzeugung eines Vakuums in dem Innenraum der Isolatorkabine und/oder eine Reinigungseinrichtung zur Reinigung des Innenraums mit einem Reinigungsfluid, beispielsweise Wasserstoffperoxid. Für den Fall der Umrüstung einer Isolatorkabine auf eine niedrigere Schutzstufe wird die Peripherie und Zubehör der höheren Schutzstufe weiterhin vorgehalten, aber - für eine Nutzungsphase der Isolatorkabine mit einer niedrigeren Schutzstufe - nicht verwendet. Diesem Ansatz liegt die Idee zugrunde, dass es sehr viel aufwändiger, wenn nicht praktisch unmöglich wäre, Isolatorkabinen, welche einer niedrigen Schutzstufe (bspw. der Schutzstufe 3) ausgelegt sind, in schneller und einfacher Weise auf eine höhere Schutzstufe umzurüsten.

Insgesamt ermöglicht es das erfindungsgemäße Isolatorsystem, Isolatoren in einer Produktionsumgebung besser und flexibler auszulasten und eine Nutzung der Isolatoren für das Personal zu vereinfachen.

Bevorzugt ist es, dass die Schnellwechsel-Schnittstelle einen stationären Schnittstellenabschnitt aufweist, der insbesondere formschlüssig mit einem mobilen Schnittstellenabschnitt zusammenwirkt oder mit einem mobilen Schnittstellenabschnitt lösbar verbunden ist.

Bei einer besonders einfachen Ausgestaltung ist die Schnellwechsel-Schnittstelle durch eine Dichtung bereitgestellt, welche zwischen der Aufstellfläche und der Isolatorkabine wirksam ist und vorzugsweise ortsfest an der Aufstellfläche angeordnet ist. In diesem Fall liegt eine untere Berandung der Isolatorkabine auf der genannten Dichtung auf und verschließt auf diese Weise den Innenraum des Isolators. Ein Austausch kann durch einfaches Abheben der Isolatorkabine von der Dichtung erfolgen; anschließend kann die Isolatorkabine gegen eine Zusatzkabine mit einer anderen Schutzstufe ausgetauscht werden.

Zur Erhöhung der Stabilität der Schnellwechsel-Schnittstelle ist es bevorzugt, wenn deren Schnittstellenabschnitte miteinander formschlüssig zusammenwirken. Ein solcher Formschluss kann beispielsweise durch insbesondere handbetätigte mechanische Elemente hergestellt werden, beispielsweise durch Drehgriffe, Rändelschrauben, Kniehebel oder Schnellspanner.

Bei einer bevorzugten Ausführungsform ist vorgesehen, dass der stationäre Schnittstellenabschnitt elektromotorisch oder pneumatisch angetrieben ist. Dies ermöglicht eine automatisierte Herstellung eines Formschlusses mit einem mobilen Schnittstellenabschnitt, beispielsweise unter Verwendung einer zentralen Steuerung des Isolators.

Zur weiteren Vereinfachung eines Austauschs der Isolatorkabine oder der Verschlussvorrichtung ist es bevorzugt, wenn die Schnellwechsel-Schnittstelle mindestens einen stationären Kontaktabschnitt zur elektrischen Kontaktierung eines mobilen Kontaktabschnitts aufweist. Auf diese Weise kann beim Fügen der Schnellwechsel-Schnittstelle gleichzeitig auch eine elektrische Verbindung zwischen einem stationären und einem mobilen Schnittstellenabschnitt hergestellt werden, ohne dass hierfür separate Montagevorgänge erforderlich wären.

In entsprechender Weise ist es möglich, dass die Schnellwechsel-Schnittstelle mindestens einen stationären Fluidversorgungsabschnitt zur Fluidversorgung eines mobilen Fluidleitungsabschnitts aufweist. Auf diese Weise kann beim Fügen der Schnellwechsel-Schnittstelle gleichzeitig auch eine Fluidverbindung zwischen einem stationären und einem mobilen Schnittstellenabschnitt hergestellt werden, ohne dass hierfür separate Montagevorgänge erforderlich wären. Bei der Fluidversorgung kann es sich beispielsweise um eine Druckluft- oder Unterdruckversorgung handeln.

Die Aufstellfläche ist auf einem Gestell angeordnet. Vorzugsweise ist ein stationärer Schnittstellenabschnitt der Schnellwechsel-Schnittstelle an der Aufstellfläche und/oder an dem Gestell angeordnet. Dies vereinfacht auch eine Anbindung eines elektromotorisch angetriebenen stationären Schnittstellenabschnitts.

Es ist bevorzugt, dass die Aufstellfläche einen umfangseitig geschlossenen Dichtungsabschnitt aufweist, der wahlweise mit jeweils einem umfangseitig geschlossen verlaufenden Gegenabschnitt der Isolatorkabine oder der Zusatzkabine zusammenwirkt. Dies ermöglicht eine einfache Herstellung einer Abdichtung einer unteren Begrenzung des Innenraums des Isolators, unabhängig davon, ob der Dichtungsabschnitt auch eine Schnellwechselschnittstelle bildet.

Wie vorstehend erläutert, ist es bevorzugt, dass die Verschlussvorrichtung eine höhere Schutzstufe aufweist, als die Zusatzverschlussvorrichtung. Hierbei ist zu berücksichtigen, dass Verschlussvorrichtungen höherer Schutzstufen im Vergleich zu Zusatzverschlussvorrichtungen mit niedrigeren Schutzstufen schwerer und raumgreifender sein können. Durch die Berücksichtigung einer Verschlussvorrichtung mit höherer Schutzstufe für einen Ausgangszustand einer Isolatorkabine ist somit in einfacher Weise gewährleistet, dass die Isolatorkabine Verschlussvorrichtungen verschiedener Schutzstufen aufnehmen kann.

Insbesondere ist es bevorzugt, dass die Verschlussvorrichtung und die Zusatzverschlussvorrichtung jeweils an einem Träger angeordnet sind, der einen mobilen Schnittstellenabschnitt der Schnellwechsel-Schnittstellen bildet oder aufweist. Bei einem solchen Träger kann es sich beispielsweise um eine Trägerplatte handeln, welche mit einem Gehäuse der Isolatorkabine oder mit einer Tür der Isolatorkabine verbunden ist oder wird. Es ist auch möglich, dass der Träger selbst eine Tür der Isolatorkabine bildet.

Eine bevorzugte Verschlussvorrichtung weist einen fluiddurchlässigen Griffschutz auf. Hierbei kann es sich beispielsweise um ein Gitter handeln, das eine Fluidströmung aus der Umgebung in den Innenraum der Isolatorkabine erlaubt, jedoch einen manuellen Eingriff in den Innenraum hinein verhindert. Dabei ist es möglich, dass der Griffschutz an einem Träger bewegbar (insbesondere verschiebbar oder verschwenkbar) gelagert ist zwischen einer Gebrauchsstellung, in welcher ein Eingriff in den Innenraum verhindert wird, und einer Freigabestellung, in welcher ein Eingriff in den Innenraum freigegeben ist.

Bevorzugte Zusatzverschlussvorrichtungen weisen einen Handschuheingriff und/oder eine fluidundurchlässige Abdeckung auf. Der Handschuheingriff ermöglicht einen fluiddichten Eingriff in den Innenraum der Isolatorkabine; die fluidundurchlässige Abdeckung verhindert einen Fluidaustausch des Innenraums der Isolatorkabine mit deren Umgebung und ist ggf. auch als mechanischer Schutz für den Handschuheingriff wirksam.

Eine weitere Möglichkeit zur Anpassung an unterschiedliche Schutzstufen besteht darin, dass die Isolatorkabine und/oder die Zusatzkabine einen Anschlussbereich mit einer Fluidöffnung aufweist, die wahlweise mit einer Absaugeinrichtung zum Absaugen von Fluid aus dem Innenraum verbunden ist oder mit einer Fluidbarriere, welche einen Austritt von Fluid aus dem Innenraum heraus verhindert.

Bei der Stoffverarbeitungseinheit handelt es sich insbesondere um eine Kapselfüllmaschine oder eine Tablettenpresse. Solche Stoffverarbeitungseinheiten dienen zur Verarbeitung von Stoffen unterschiedlicher Toxizität und unterschiedlicher Empfindlichkeit gegen eine Kontamination von außen.

Die Erfindung betrifft ferner ein Verfahren zur Bereitstellen eines Isolators unter Verwendung eines vorstehend beschriebenen Isolatorsystems, wobei ein Isolator mit einer ersten Schutzstufe bereitgestellt wird, und wobei durch Austausch der Isolatorkabine durch die Zusatzkabine ein Isolator mit einer abweichenden Schutzstufe bereitgestellt wird. Insbesondere ist ein Wechsel von der Schutzstufe 5 auf die Schutzstufe 4 und/oder ein Wechsel von der Schutzstufe 4 auf die Schutzstufe 3 möglich. Es ist auch ein Wechsel von einer niedrigeren auf eine höhere Schutzstufe möglich.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt
- Fig. 1: eine perspektivische Ansicht einer ersten Ausführungsform eines Isolators;
- Fig. 2: eine perspektivische Ansicht einer weiteren Ausführungsform eines Isolators;
- Fig. 3: eine Draufsicht auf eine Aufstellplatte des Isolators gemäß Fig. 2;
- Fig. 4: eine perspektivische Ansicht eines Details des Isolators gemäß Fig. 2 aus einer oberen Perspektive;
- Fig. 5: eine der Fig. 4 entsprechende Ansicht aus einer unteren Perspektive;
- Fig. 6: eine perspektivische Vorderansicht einer Ausführungsform einer Isolatorkabine mit einer Zusatzverschlussvorrichtung;
- Fig. 7: eine der Fig. 6 entsprechende Ansicht ohne die Zusatzverschlussvorrichtung;
- Fig. 8: eine der Fig. 7 entsprechende Ansicht mit einer Verschlussvorrichtung;
- Fig. 9: eine perspektivische Rückansicht der Isolatorkabine gemäß Fig. 6 mit einer weiteren Zusatzverschlussvorrichtung;
- Fig. 10: eine der Fig. 9 entsprechende Ansicht ohne die weitere Zusatzverschlussvorrichtung;
- Fig. 11: eine der Fig. 10 entsprechende Ansicht mit einer weiteren Verschlussvorrichtung;
- Fig. 12: eine perspektivische Vorderansicht einer weiteren Ausführungsform einer Isolatorkabine mit einer an einer Tür angeordneten Zusatzverschlussvorrichtung;
- Fig. 13: eine der Fig. 12 entsprechende Ansicht ohne die Zusatzverschlussvorrichtung;
- Fig. 14: eine der Fig. 13 entsprechende Ansicht mit einer Verschlussvorrichtung;
- Fig. 15: eine perspektivische Rückansicht der Isolatorkabine gemäß Fig. 12 mit einer an einer Tür angeordneten weiteren Zusatzverschlussvorrichtung;
- Fig. 16: eine der Fig. 15 entsprechende Ansicht ohne die weitere Zusatzverschlussvorrichtung; und
- Fig. 17: eine der Fig. 16 entsprechende Ansicht mit einer weiteren Verschlussvorrichtung.

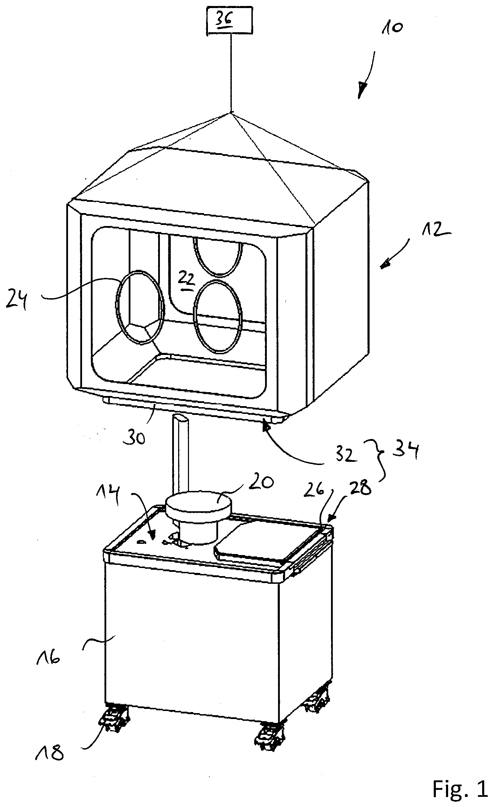

Eine Ausführungsform eines Isolators ist in Figur 1 dargestellt und insgesamt mit dem Bezugszeichen 10 bezeichnet. Der Isolator 10 umfasst eine Isolatorkabine 12, welche auf eine bodenseitige Aufstellfläche 14 aufsetzbar oder aufgesetzt ist. Die Aufstellfläche 14 ist mit einem Gestell 16 verbunden, welches ortsfest ist, oder aber über Rollen 18 oder einen Verfahrantrieb bewegbar ist.

Die Aufstellfläche 14 dient zur Anordnung zur Stoffverarbeitungseinheit 20, bei der es sich insbesondere um eine Kapselfüllmaschine oder eine Tablettenpresse handelt.

Bei Verbindung der Isolatorkabine 12 und der bodenseitigen Aufstellfläche 14 begrenzen die Aufstellfläche 14 und die Isolatorkabine 12 gemeinsam einen Innenraum 22, in welchem die Stoffverarbeitungseinheit 20 angeordnet ist.

Die Aufstellfläche 14 weist einen umfangseitig geschlossen verlaufenden Dichtungsabschnitt 26 auf, der einen stationären Schnittstellenabschnitt 28 bildet.

Eine untere Umrandung und Begrenzung der Isolatorkabine 12 weist einen umfangseitig geschlossen verlaufenden Dichtungssteg 30 auf, der einen mobilen Schnittstellenabschnitt 32 bildet. Die Schnittstellenabschnitte 28, 32 bilden gemeinsam eine Schnellwechsel-Schnittstelle 34.

Zur Montage der Isolatorkabine 12 auf der Aufstellfläche 14 ist eine Hebeeinrichtung 36 vorgesehen, welche die Isolatorkabine 12 aus einem von der Abstellfläche abgehobenen Zustand in Richtung auf die Aufstellfläche 14 absenkt, bis der Dichtungssteg 30 auf den Dichtungsabschnitt 26 trifft und diesen, bedingt durch das Gewicht der Isolatorkabine 12, eindrückt, so dass eine fluiddichte Verbindung zwischen der Aufstellfläche 14 und der Isolatorkabine 12 hergestellt ist.

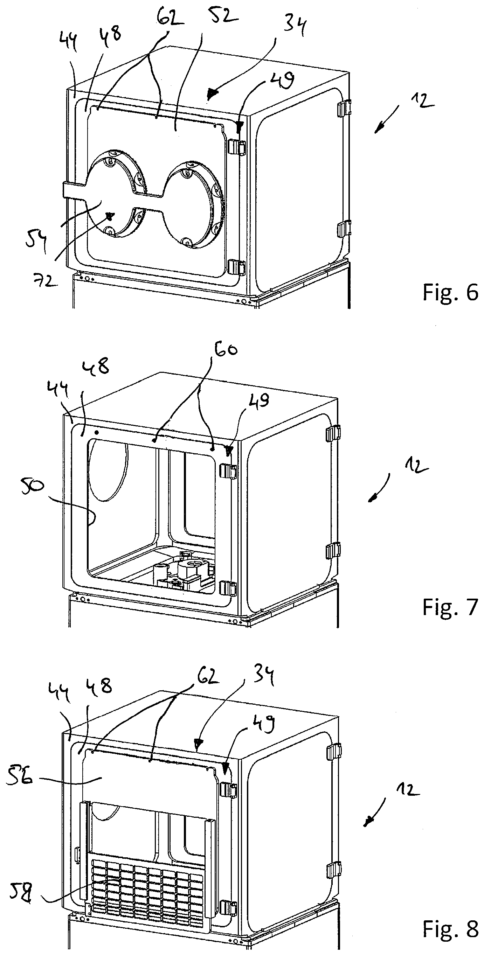

Die Isolatorkabine 12 umfasst eine Verschlussvorrichtung, welche an der Zugriffsöffnung 24 angeordnet ist, jedoch in Figur 1 nicht dargestellt ist. Solche Verschlussvorrichtungen werden nachfolgend unter Bezugnahme auf Figuren 6 bis 17 beschrieben.

Der in Figur 1 dargestellte Isolator 10 ist Teil eines Isolatorsystems, welche zusätzlich zu der in der Zeichnung dargestellten Isolatorkabine 12 eine weitere, nicht in der Zeichnung dargestellte Zusatzkabine umfasst. Die Isolatorkabine 12 und die Zusatzkabine sind im Bereich ihrer jeweiligen Zugriffsöffnungen 24 mit Verschlussvorrichtungen bzw. Zusatzverschlussvorrichtungen ausgestattet, die unterschiedlichen Schutzstufen zugeordnet sind. Auf diese Weise kann durch einen einfachen Wechsel der Isolatorkabine 12 gegen eine Zusatzkabine ein Isolator 10 mit einer geänderten Schutzstufe bereitgestellt werden.

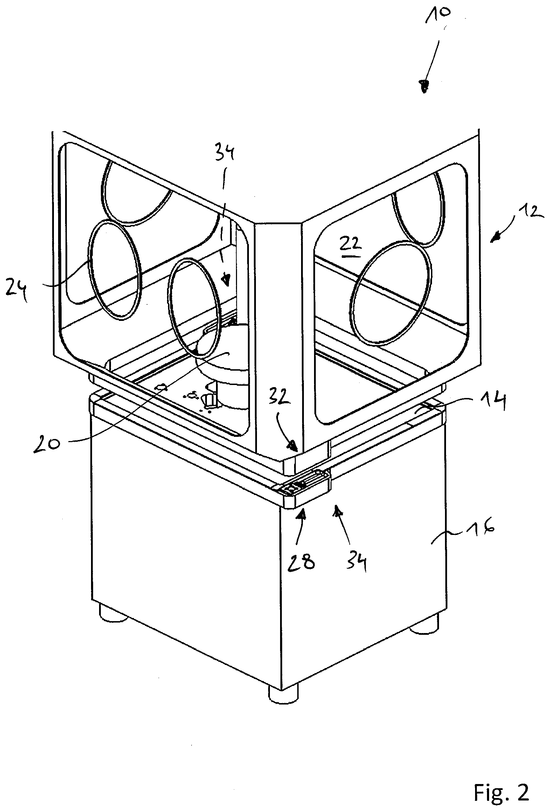

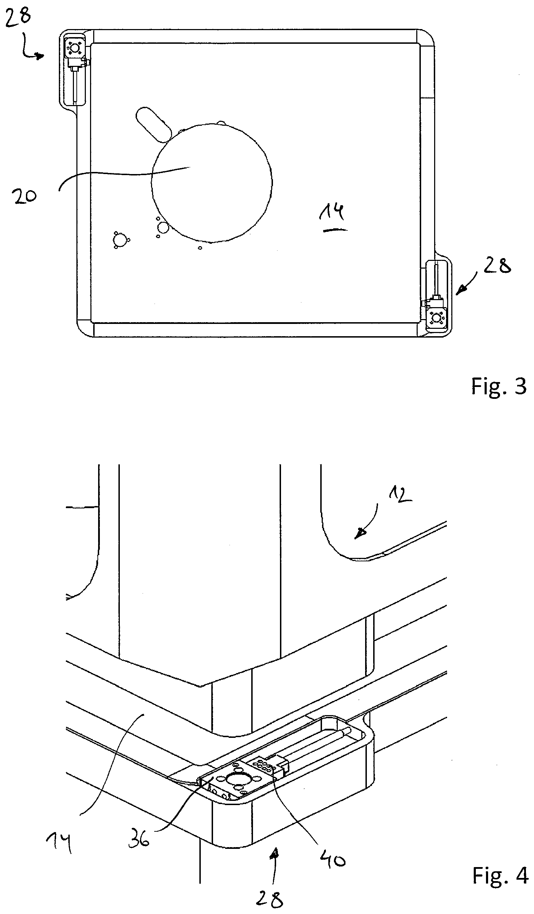

In den Figuren 2 bis 5 ist eine weitere Ausführungsform eines Isolators 10 dargestellt, der einen mit dem Isolator 10 gemäß Figur 1 vergleichbaren Aufbau aufweist, sich jedoch hinsichtlich der Ausgestaltung der Schnellwechsel-Schnittstelle 34 von der Ausführungsform gemäß Figur 1 unterscheidet. Die Schnellwechsel-Schnittstelle 34 der Ausführungsform gemäß Figuren 2 bis 5 ist mindestens einfach, vorzugsweise doppelt vorgesehen, vgl. Figuren 2 und 3. Mindestens ein stationärer Schnittstellenabschnitt 28 ist in einem Randbereich oder seitlich der Aufstellfläche 14 angeordnet. Der mindestens eine stationäre Schnittstellenabschnitt 28 weist ein Aufnahmeelement 36 zur formschlüssigen Aufnahme und elektromotorischen Verriegelung eines Formschlusselements 38 des mobilen Schnittstellenabschnitts 32 der Isolatorkabine 12 auf.

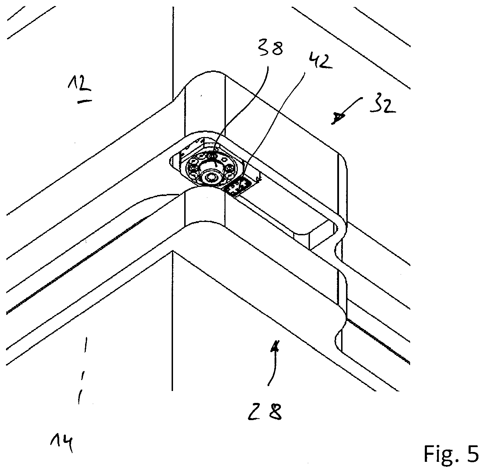

Der stationäre Schnittstellenabschnitt 28 weist ferner einen stationären Kontaktabschnitt 40 zur elektrischen Kontaktierung eines mobilen Kontaktabschnitts 42 des mobilen Schnittstellenabschnitts 32 auf, vgl. Figuren 4 und 5.

Auch der Isolator 10 gemäß Figuren 2 bis 5 ist Teil eines Isolatorsystems, das zusätzlich zu der dargestellten Isolatorkabine 12 eine nicht dargestellte Zusatzkabine umfasst, wobei die jeweiligen Zugriffsöffnungen 24 der Isolatorkabine 12 und der Zusatzkabine mit Verschlussvorrichtungen bzw. Zusatzverschlussvorrichtungen unterschiedlicher Schutzstufen versehen sind.

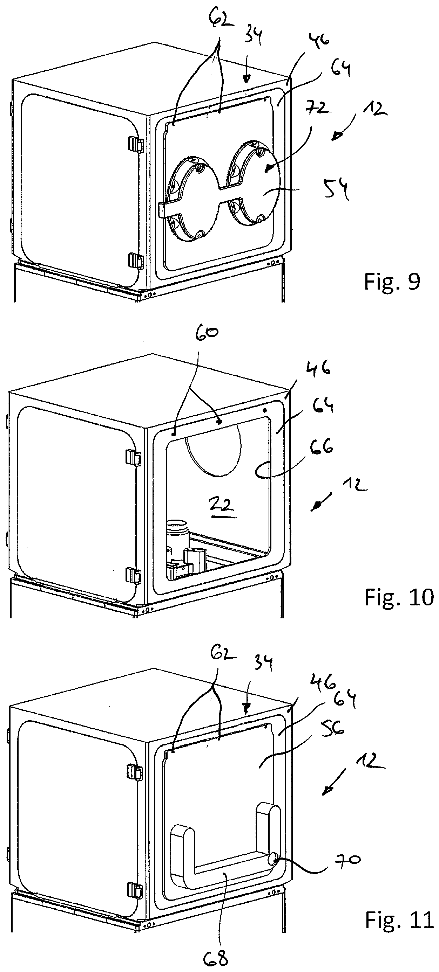

In den Figuren 6 bis 11 ist eine Ausführungsform einer Isolatorkabine 12 eines Isolators 10 dargestellt, wobei die Figuren 6 bis 8 vorderseitige Perspektiven zeigen und die Figuren 9 bis 11 rückwärtige Perspektiven.

Die Isolatorkabine 12 weist eine Vorderwand 44 und eine Rückwand 46 auf. An der Vorderwand 44 ist eine Tür 48 beispielsweise mittels Scharnieren 49 schwenkbar gelagert. Die Tür 48 weist eine in die Tür integrierte Türöffnung 50 auf, vgl. Figur 7. Die Türöffnung 50 ist wahlweise durch einen Träger 52 verschließbar, an welcher eine Verschlussvorrichtung 54 einer ersten Schutzklasse angeordnet und insbesondere dort befestigt ist, vgl. Figur 6, oder durch einen Träger 56, an welchem eine Zusatzverschlussvorrichtung 56 einer von der ersten Schutzklasse abweichenden Schutzklasse angeordnet und insbesondere dort befestigt ist, vgl. Figur 8.

Die Träger 52, 56 sind jeweils über eine Schnellwechsel-Schnittstelle 34 mit der Isolatorkabine 12 verbindbar. Die Schnellwechsel-Schnittstelle 34 ist als lösbare Verbindung, beispielsweise in Form einer Schraubverbindung ausgeführt. Zu diesem Zweck weist die Tür 48 einen stationären Schnittstellenabschnitt 60 in Form mindestens einer Schraubenaufnahme auf (vgl. Fig. 7). Die Träger 52, 56 weisen einen mobilen Schnittstellenabschnitt 62 in Form mindestens eines Schraubendurchtrittsbereichs zum Durchtritt jeweils einer Schraube (nicht dargestellt) auf, vgl. Figuren 6 und 8. Die mobilen Schnittstellenabschnitte 62 der unterschiedlichen Träger 52 und 56 sind wahlweise und austauschbar mit dem stationären Schnittstellenabschnitt 60 verbunden oder verbindbar.

Bei Verzicht auf die Anordnung eines der Träger 52, 56 wird eine Isolatorkabine 12 mit einer vergleichsweise niedrigeren Schutzklasse bereitgestellt, vgl. Fig. 7, mit einer offenen Türöffnung 50 der Tür 48.

Optional bildet eine Berandung der Türöffnung 50 der Tür 48 einen stationären Schnittstellenabschnitt 60, der mit jeweils einem mobilen Schnittstellenabschnitt 62 (beispielsweise mit in Eingriffslage hinterschneidenden Drehhaken) des Trägers 52 oder 56 zusammenwirkt.

Im Bereich der Rückwand 46 weist die Isolatorkabine 12 einen Rahmen 64 auf, der eine Rahmenöffnung 66 umgrenzt, vgl. Figur 10. Der Rahmen 64 kann fest mit der Rückwand 46 verbunden sein oder als beispielsweise verschwenkbare Tür ausgeführt sein, der Tür 48 an der Vorderseite 44 der Isolatorkabine 12 entsprechend. Die Rahmenöffnung 66 kann über eine Schnellwechsel-Schnittstelle 34, beispielweise der vorstehend unter Bezugnahme auf die Figuren 6 bis 8 beschriebenen Art, verschlossen werden. Beispielsweise kann ein Träger 52 mit einer Verschlussvorrichtung 54 verwendet werden, vgl. Figur 9. Es kann wahlweise auch ein Träger 56 verwendet werden, der mit einem Absaugbereich 68 versehen ist, vgl. Fig. 11.

Der Absaugbereich 68 kommuniziert mit dem Innenraum 22 der Isolatorkabine 12 und führt Luft aus dem Innenraum 22 der Isolatorkabine 12 über den Absaugbereich 68 einer Fluidöffnung 70 zu, welche optional mit einer (nicht dargestellten) Absaugeinrichtung verbindbar oder verbunden ist.

Die beiden Verschlussvorrichtungen 54, vergleiche Figuren 6 und 9, weisen Abdeckungen 72 auf, welche fluidundurchlässig sind. Die Verschlussvorrichtungen 54 können von den Abdeckungen 72 abdeckbare Handschuheingriffe aufweisen.

Die Konfiguration der Isolatorkabine 12 gemäß Figuren 6 und 9 ist einer ersten Schutzstufe zugeordnet, insbesondere der Schutzstufe 5. Die Konfiguration der Isolatorkabine 12 gemäß Figuren 8 und 11 ist einer vergleichsweise niedrigeren Schutzstufe zugeordnet, beispielsweise der Schutzstufe 3 (Fluidöffnung 70 offen) oder der Schutzstufe 4 (Fluidöffnung 70 mit einer externen Absaugeinrichtung verbunden).

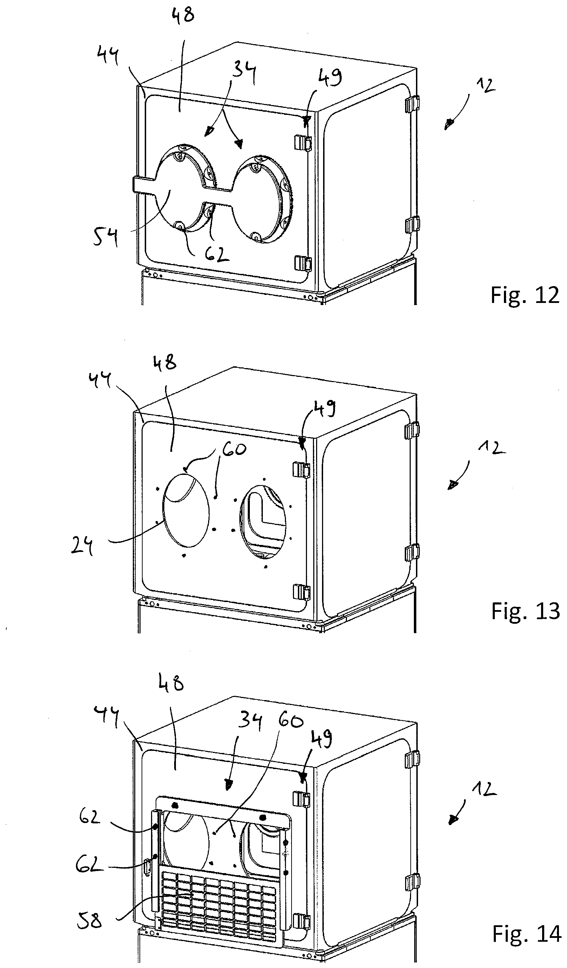

Eine nachfolgend unter Bezugnahme auf Figuren 12 bis 17 beschriebene Ausführungsform einer Isolatorkabine 12 weist einen mit der Isolatorkabine 12 gemäß Figuren 6 bis 11 vergleichbaren Aufbau auf. Bei der Ausführungsform gemäß Figuren 12 bis 17 ist an der Vorderwand 44 eine Tür 48 angeordnet, welche mittels Scharnieren 49 öffenbar und schließbar ist und einen Träger für die Verschlussvorrichtung 54 (vgl. Figur 12), für offene Zugriffsöffnungen 24 (vgl. Figur 13) oder eine Zusatzverschlussvorrichtung 58 (vgl. Figur 14) bildet.

Die Schnellwechsel-Schnittstelle 34 ist als lösbare Verbindung, beispielsweise in Form einer Schraubverbindung ausgeführt. Zu diesem Zweck weist die Tür 48 einen stationären Schnittstellenabschnitt 60 in Form mindestens einer Schraubenaufnahme auf (vgl. Fig. 13). Die Verschlussvorrichtung 54 (vgl. Figur 12) und die Zusatzverschlussvorrichtung 58 (vgl. Figur 14) weisen jeweils einen mobilen Schnittstellenabschnitt 62 in Form mindestens einer Schraube auf, vgl. Figuren 12 und 14. Die mobilen Schnittstellenabschnitte 62 der beiden Verschlussvorrichtungen 54 und 58 sind wahlweise und austauschbar mit dem stationären Schnittstellenabschnitt 60 verbunden oder verbindbar.

Bei Verzicht auf die Anordnung einer Verschlussvorrichtung 54, 58 wird eine Isolatorkabine 12 mit einer vergleichsweise niedrigeren Schutzklasse bereitgestellt, vgl. Fig. 13, mit einer offenen Zugriffsöffnung 24 der Tür 48.

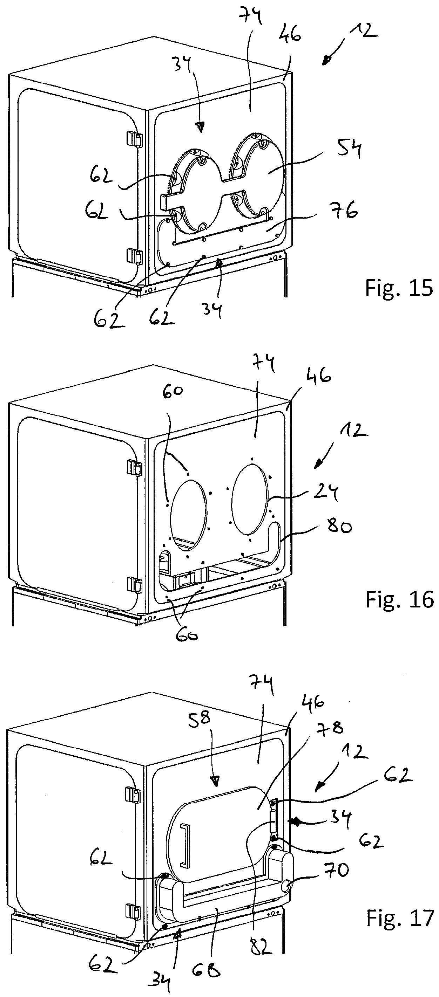

Die Isolatorkabine 12 gemäß Figuren 12 bis 17 weist an ihrer Rückwand 46 eine die Rückwand abschnittsweise verschließende Blende 74 auf, an der wahlweise eine Verschlussvorrichtung 54 (bspw. ein Handschuheingriff), optional eine Zusatzblende 76 (vgl. Figur 15), oder ein Absaugbereich 68 und eine Zusatzverschlussvorrichtung 58 in Form einer Zusatztür 78 (vgl. Figur 17) angeordnet sind. Die Zusatztür 78 kann über ein Scharnier 82 angelenkt sein und beispielsweise magnetisch in einer geschlossenen Türstellung gehalten sein.

Es ist möglich, dass die Blende 74 frei von weiteren Bauteilen ist, und beispielsweise eine offene Zugriffsöffnung 24 und optional eine offene Zusatzöffnung 80 aufweist, vgl. Figur 16.

Die Blende 74 bildet einen Träger, der fest mit der Rückwand 46 verbunden ist oder alternativ hierzu als beispielsweise verschwenkbare Tür ausgeführt sein, der Tür 48 an der Vorderseite 44 der Isolatorkabine 12 entsprechend.

Die Schnellwechsel-Schnittstelle 34 ist als lösbare Verbindung, beispielsweise in Form einer Schraubverbindung ausgeführt. Zu diesem Zweck weist die Blende 74 (oder eine Tür 48) einen stationären Schnittstellenabschnitt 60 in Form mindestens einer Schraubenaufnahme auf (vgl. Fig. 16). Die Verschlussvorrichtung 54 und die Zusatzblende 76 (vgl. Figur 15) und der Absaugbereich 68 und die Zusatztür 78 (vgl. Figur 17) weisen jeweils einen mobilen Schnittstellenabschnitt 62 in Form mindestens einer Schraube auf, vgl. Figuren 15 und 17. Diese mobilen Schnittstellenabschnitte 62 sind wahlweise und austauschbar mit dem stationären Schnittstellenabschnitt 60 verbunden oder verbindbar.

Bei Verzicht auf die Anordnung einer Verschlussvorrichtung 54, 58 wird eine Isolatorkabine 12 mit einer vergleichsweise niedrigeren Schutzklasse bereitgestellt, vgl. Fig. 16, mit einer offenen Zugriffsöffnung 24 der Blende 74 oder einer Tür 48, ggf. auch mit der offenen Zusatzöffnung 80.

Wie vorstehend unter Bezugnahme auf die Figuren 6 bis 11 erläutert, ist der Isolatorkabine 12 gemäß Figuren 12 und 15 eine höhere Schutzstufe zugeordnet als der Isolatorkabine 12 gemäß Figuren 14 und 17.

## Patentansprüche

1. Isolatorsystem, mit einem Isolator (10), der eine Isolatorkabine sowie einen Innenraum (22) zur Verarbeitung eines Stoffs aufweist, wobei der Innenraum (22) begrenzt ist durch eine bodenseitige, auf einem Gestell (16) angeordnete Aufstellfläche (14), auf welcher eine insbesondere als Kapselfüllmaschine oder Tablettenpresse ausgebildete Stoffverarbeitungseinheit (20) angeordnet ist, und durch die Isolatorkabine (12) mit mindestens einer Zugriffsöffnung (24), wobei der Zugriffsöffnung (24) mindestens eine Verschlussvorrichtung (54) zur wahlweisen Freigabe oder Blockierung der Zugriffsöffnung zugeordnet ist, wobei die Aufstellfläche einen stationären Bestandteil des Isolatorsystems bildet und dass das Isolatorsystem eine Zusatzkabine zum Austausch der Isolatorkabine (12) umfasst, wobei die Zusatzkabine eine andere Schutzstufe aufweist als die Isolatorkabine (12), wobei die Isolatorkabine (12) auf die bodenseitige Aufstellfläche (14) aufsetzbar oder aufgesetzt ist, wobei das Isolatorsystem mindestens eine Schnellwechsel-Schnittstelle (34) zum Austausch der Isolatorkabine (12) gegen die Zusatzkabine aufweist.

2. Isolatorsystem nach Anspruch 1, **dadurch gekennzeichnet, dass** die Schnellwechsel-Schnittstelle (34) einen stationären Schnittstellenabschnitt (28) aufweist, der insbesondere formschlüssig mit einem mobilen Schnittstellenabschnitt (32) zusammenwirkt oder mit einem mobilen Schnittstellenabschnitt (32) lösbar verbunden ist.

3. Isolatorsystem nach Anspruch 2, **dadurch gekennzeichnet, dass** der stationäre Schnittstellenabschnitt (28) elektromotorisch oder pneumatisch angetrieben ist.

4. Isolatorsystem nach einem der vorstehenden Ansprüche, **dadurch gekennzeichnet, dass** die Schnellwechsel-Schnittstelle (34) mindestens einen stationären Kontaktabschnitt (40) zur elektrischen Kontaktierung eines mobilen Kontaktabschnitts (42) aufweist.

5. Isolatorsystem nach einem der vorstehenden Ansprüche, **dadurch gekennzeichnet, dass** die Schnellwechsel-Schnittstelle (34) mindestens einen stationären Fluidversorgungsabschnitt zur Fluidversorgung eines mobilen Fluidleitungsabschnitts aufweist.

6. Isolatorsystem nach einem der vorstehenden Ansprüche, **dadurch gekennzeichnet, dass** die Aufstellfläche (14) einen umfangsseitig geschlossen verlaufenden Dichtungsabschnitt (26) aufweist, der wahlweise mit jeweils einem umfangsseitig geschlossen verlaufenden Gegenabschnitt (30) der Isolatorkabine (12) oder der Zusatzkabine zusammenwirkt.

7. Isolatorsystem nach einem der vorstehenden Ansprüche, **dadurch gekennzeichnet, dass** das Isolatorsystem mindestens eine Schnellwechsel-Schnittstelle (34) zum Austausch der Verschlussvorrichtung (54) gegen eine Zusatzverschlussvorrichtung (58) aufweist, vorzugsweise wobei die Verschlussvorrichtung (54) eine höhere Schutzstufe aufweist als die Zusatzverschlussvorrichtung (58).

8. Isolatorsystem nach Anspruch 7, **dadurch gekennzeichnet, dass** die Verschlussvorrichtung (54) und die Zusatzverschlussvorrichtung (58) jeweils an einem Träger (52, 56) angeordnet sind, der einen mobilen Schnittstellenabschnitt (62) der Schnellwechsel-Schnittstelle (34) bildet oder aufweist.

9. Isolatorsystem nach Anspruch 7 oder 8, **dadurch gekennzeichnet, dass** die Zusatzverschlussvorrichtung (58) einen fluiddurchlässigen Griffschutz aufweist.

10. Isolatorsystem nach einem der vorstehenden Ansprüche, **dadurch gekennzeichnet, dass** die Verschlussvorrichtung (54) einen Handschuheingriff und/oder eine fluidundurchlässige Abdeckung (72) aufweist.

11. Isolatorsystem nach einem der vorstehenden Ansprüche, **dadurch gekennzeichnet, dass** die Isolatorkabine (12) und/oder die Zusatzkabine einen Absaugbereich (68) mit einer Fluidöffnung (70) aufweist, die wahlweise mit einer Absaugeinrichtung zum Absaugen von Fluid aus dem Innenraum (22) verbunden ist oder mit einer Fluidbarriere, welche einen Austritt von Fluid aus dem Innenraum heraus verhindert.

12. Verfahren zur Bereitstellung eines Isolators unter Verwendung eines Isolatorsystems nach einem der vorstehenden Ansprüche, wobei ein Isolator (10) mit einer ersten Schutzstufe bereitgestellt wird, **dadurch gekennzeichnet, dass** durch Austausch der Isolatorkabine (12) durch die Zusatzkabine ein Isolator mit einer abweichenden Schutzstufe bereitgestellt wird.

## Claims

1. Isolator system, having an isolator (10) which has an isolator cabin and an interior space (22) for processing a substance, wherein the interior space (22) is delimited by a base-side mounting surface (14) arranged on a stand (16), on which mounting surface a substance-processing unit (20) that is in particular designed as a capsule-filling machine or a tablet press is arranged, and by the isolator cabin (12) with at least one access opening (24), wherein the access opening (24) is assigned at least one closure device (54) for optionally opening up or blocking the access opening, wherein the mounting surface forms a stationary component of the isolator system and the isolator system comprises an additional cabin for exchanging the isolator cabin (12), wherein the additional cabin has a different protection level than the isolator cabin (12), wherein the isolator cabin (12) can be placed or is placed onto the base-side mounting surface (14), wherein the isolator system has at least one quick-change interface (34) for exchanging the isolator cabin (12) for the additional cabin.

2. Isolator system according to claim 1, **characterized in that** the quick-change interface (34) has a stationary interface section (28) which in particular interacts positively with a mobile interface section (32) or is releasably connected to a mobile interface section (32).

3. Isolator system according to claim 2, **characterized in that** the stationary interface section (28) is driven by electric motor or pneumatically.

4. Isolator system according to any of the preceding claims,
**characterized in that** the quick-change interface (34) has at least one stationary contact section (40) for electrically contacting a mobile contact section (42).

5. Isolator system according to any of the preceding claims,
**characterized in that** the quick-change interface (34) has at least one stationary fluid supply section for a fluid supply of a mobile fluid line section.

6. Isolator system according to any of the preceding claims,
**characterized in that** the mounting surface (14) has a sealing section (26) which extends in a closed manner on a circumferential side and optionally interacts with a mating section (30), which extends in a closed manner on the circumferential side, of the isolator cabin (12) or of the additional cabin.

7. Isolator system according to any of the preceding claims,
**characterized in that** the isolator system has at least one quick-change interface (34) for exchanging the closure device (54) for an additional closure device (58), preferably wherein the closure device (54) has a higher protection level than the additional closure device (58).

8. Isolator system according to claim 7, **characterized in that** the closure device (54) and the additional closure device (58) are each arranged on a support (52, 56) which forms or has a mobile interface section (62) of the quick-change interface (34).

9. Isolator system according to claim 7 or 8, **characterized in that** the additional closure device (58) has fluid-permeable handling protection.

10. Isolator system according to any of the preceding claims,
**characterized in that** the closure device (54) has a glove port and/or a fluidimpermeable covering (72).

11. Isolator system according to any of the preceding claims,
**characterized in that** the isolator cabin (12) and/or the additional cabin has a suction region (68) with a fluid opening (70) which is optionally connected to a suction device for sucking off fluid from the interior space (22) or to a fluid barrier which prevents fluid from escaping out of the interior space.

12. Method for preparing an isolator using an isolator system according to any of the preceding claims, an isolator (10) with a first protection level being provided, **characterized in that** an isolator with a different protection level is provided by exchanging the isolator cabin (12) for the additional cabin.

## Revendications

1. Système d'isolateur, comportant un isolateur (10) qui présente une cabine d'isolateur ainsi qu'un espace intérieur (22) permettant le traitement d'une substance, dans lequel l'espace intérieur (22) est délimité par une surface de pose (14) côté sol, disposée sur un bâti (16), sur laquelle est disposée une unité de traitement de substance (20) réalisée en particulier comme un gélulier ou une presse à comprimés, et par la cabine d'isolateur (12) comportant au moins une ouverture d'accès (24), dans lequel au moins un dispositif de fermeture (54) est associé à l'ouverture d'accès (24) pour la libération ou le blocage au choix de l'ouverture d'accès, dans lequel la surface de pose forme une partie constitutive stationnaire du système d'isolateur et en ce que le système d'isolateur comprend une cabine supplémentaire pour le remplacement de la cabine d'isolateur (12), dans lequel la cabine supplémentaire présente un autre niveau de protection que la cabine d'isolateur (12), dans lequel la cabine d'isolateur (12) peut être posée ou est posée sur la surface de pose (14) côté sol, dans lequel le système d'isolateur présente au moins une interface de changement rapide (34) pour le remplacement de la cabine d'isolateur (12) par la cabine supplémentaire.

2. Système d'isolateur selon la revendication 1, **caractérisé en ce que** l'interface de changement rapide (34) présente une section d'interface stationnaire (28) qui coopère en particulier par complémentarité de forme avec une section d'interface mobile (32) ou qui est reliée de manière amovible à une section d'interface mobile (32).

3. Système d'isolateur selon la revendication 2, **caractérisé en ce que** la section d'interface stationnaire (28) est entraînée par un moteur électrique ou de manière pneumatique.

4. Système d'isolateur selon l'une des revendications précédentes,
**caractérisé en ce que** l'interface de changement rapide (34) comprend au moins une section de contact stationnaire (40) pour l'établissement d'un contact électrique avec une section de contact mobile (42).

5. Système d'isolateur selon l'une des revendications précédentes,
**caractérisé en ce que** l'interface de changement rapide (34) comprend au moins une section d'alimentation en fluide stationnaire pour l'alimentation en fluide d'une section de conduite de fluide mobile.

6. Système d'isolateur selon l'une des revendications précédentes,
**caractérisé en ce que** la surface de pose (14) présente une section d'étanchéité (26) s'étendant de manière fermée sur la périphérie, qui coopère au choix avec respectivement une section opposée (30) s'étendant de manière fermée sur la périphérie de la cabine d'isolateur (12) ou de la cabine supplémentaire.

7. Système d'isolateur selon l'une des revendications précédentes,
**caractérisé en ce que** le système d'isolateur comprend au moins une interface de changement rapide (34) pour le remplacement du dispositif de fermeture (54) par un dispositif de fermeture supplémentaire (58), de préférence dans lequel le dispositif de fermeture (54) présente un niveau de protection plus élevé que le dispositif de fermeture supplémentaire (58).

8. Système d'isolateur selon la revendication 7, **caractérisé en ce que** le dispositif de fermeture (54) et le dispositif de fermeture supplémentaire (58) sont respectivement disposés sur un support (52, 56) qui forme ou présente une section d'interface mobile (62) de l'interface de changement rapide (34).

9. Système d'isolateur selon la revendication 7 ou 8, **caractérisé en ce que** le dispositif de fermeture supplémentaire (58) présente une protection de poignée perméable aux fluides.

10. Système d'isolateur selon l'une des revendications précédentes,
**caractérisé en ce que** le dispositif de fermeture (54) présente un manchon ganté et/ou un élément de recouvrement (72) imperméable aux fluides.

11. Système d'isolateur selon l'une des revendications précédentes,
**caractérisé en ce que** la cabine d'isolateur (12) et/ou la cabine supplémentaire présente une zone d'aspiration (68) comportant une ouverture pour fluide (70) qui est reliée au choix à un dispositif d'aspiration pour l'aspiration du fluide hors de l'espace intérieur (22) ou à une barrière de fluide qui empêche une sortie de fluide hors de l'espace intérieur.

12. Procédé permettant de fournir un isolateur à l'aide d'un système d'isolateur selon l'une des revendications précédentes, dans lequel un isolateur (10) est fourni avec un premier niveau de protection,
**caractérisé en ce qu'**un isolateur avec un niveau de protection différent est fourni en remplaçant la cabine d'isolateur (12) par la cabine supplémentaire.
